(19)

Europäisches
Patentamt
European
Patent Office
Office européen
des brevets

(11) **EP 3 242 775 B1**

(12) **EUROPEAN PATENT SPECIFICATION**

(45) Date of publication and mention
of the grant of the patent:
**22.12.2021 Bulletin 2021/51**

(21) Application number: **15700190.0**

(22) Date of filing: **07.01.2015**

(51) Int Cl.:
**B25J 9/16** [(2006.01)]

(86) International application number:
**PCT/EP2015/050146**

(87) International publication number:
**WO 2016/110320 (14.07.2016 Gazette 2016/28)**

(54) **METHOD FOR ESTIMATION OF EXTERNAL FORCES AND TORQUES ON A ROBOT ARM**

VERFAHREN ZUR SCHÄTZUNG DER EXTERNEN KRÄFTEN UND DREHMOMENTE AUF EINEM ROBOTERARM

PROCÉDÉ POUR L'ESTIMATION DE FORCES EXTERNES ET DE COUPLES SUR UN BRAS DE ROBOT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.11.2017 Bulletin 2017/46**

(73) Proprietor: **ABB Schweiz AG
5400 Baden (CH)**

(72) Inventors:
- **WAHRBURG, Arne
64293 Darmstadt (DE)**
- **MATTHIAS, Björn
76669 Bad Schönborn (DE)**
- **DING, Hao
69115 Heidelberg (DE)**

(74) Representative: **Beetz & Partner mbB
Patentanwälte
Robert-Koch-Str. 1
80538 München (DE)**

(56) References cited:
**EP-A2- 2 815 855          KR-A- 20120 037 128
US-A1- 2011 060 460**

- **TUNGPATARATANAWONG S ET AL: "Force
sensor-less workspace impedance control
considering resonant vibration of industrial
robot", INDUSTRIAL ELECTRONICS SOCIETY,
2005. IECON 2005. 31ST ANNUAL CONFERENCE
OF IEEE, IEEE, PISCATAWAY, NJ, USA, 6
November 2005 (2005-11-06), pages 1878-1883,
XP010876402, DOI: 10.1109/IECON.2005.1569191
ISBN: 978-0-7803-9252-6**
- **DANESH M ET AL: "AN ADAPTIVE
MANIPULATOR CONTROLLER BASED ON
FORCE AND PARAMETER ESTIMATION", IEICE
TRANSACTIONS ON FUNDAMENTALS OF
ELECTRONICS,COMMUNICATIONS AND
COMPUTER SCIENCES, ENGINEERING
SCIENCES SOCIETY, TOKYO, JP, vol. E89A, no.
10, 1 October 2006 (2006-10-01), pages 2803-2811,
XP001502658, ISSN: 0916-8508, DOI:
10.1093/IETFEC/E89-A.10.2803**

**Description**

The invention is related to a method for estimation of external forces and torques on the robot arm of a robot with a kinematic chain of robot arm members, which are coupled by respective joints, wherein the joints are driven by respective motors and wherein the robot comprises a robot controller which is adapted to control the movement of the robot arm according to data of a robot program, and to continuously provide values for the following three terms:

(1) $\tau_{mot}$ describing the torque vector of the joint motors,
(2)

$$\Big(H(q) \cdot \ddot{q} + C(q,\dot{q}) \cdot \dot{q} + \tau_{grav}(q)\Big),$$

with $H(q) \cdot \ddot{q} + C(q,\dot{q}) \cdot \dot{q}$ describing the dynamic behavior of the robot arm and $\tau_{grav}(q)$ describing a torque vector which consists of torques due to gravity effects and
(3) q describing the current joint angles of the robot arm.

Industrial robots are used in wide areas of production. A robot typically comprises a robot arm with for example six arm members, which are linked by six respective motor driven joints so that in total six degrees of freedom in movement are realized therewith. Of course robots might also have 4, 5 or 7 degrees of freedom in movement. Typically three arm members with three degrees of freedom in movement build the base part of a robot arm, so that it can be moved to a desired coordinate within the working space of the robot. In many cases a wrist with additional three degrees of freedom in movement is provided at the distal end of the base part of the robot arm, which provides not only the possibility to reach a coordinate within the working space but also to have a desired orientation.

A robot controller controls the motors of the joints in such a way that the tip of the robot arm respectively the tool center point (TCP) of the robot arm performs a desired movement, for example corresponding to the data of a robot program which is stored within the robot controller.

A robot arm might have a length of for example 0,5m, 1m or 3m in total. The position of the tip of the robot arm relative to the robot base depends on the actual joint angles of the joints and the geometry of the robot arm members. Dependent on the actual joint angles and the actual speed respectively actual acceleration of the robot arm there is a certain potential to apply a force or wrench impact on a person or an object in case of a collision. A wrench has to be understood as the impact of external forces and/or torques on a robot arm.

It is known that in traditional robot applications, industrial robots are purely position controlled. A desired position for the joint angles is set and the control of the robot controller aims at aligning the measured joint angles with these set points. However, operation of industrial robots in unstructured environments generates the demand of measuring, supervising, and controlling not only position but also the forces and torques the robots exerts onto the environment.

Some applications include force-controlled operation and collision detection which are related to safety related aspects which might occur for example in case of human robot collaboration.

Current solutions for force-controlled application rely on additional sensors, such as joint torque sensors or force/torque sensors mounted on the wrist. Since such sensing devices are costly and difficult to mount for some industrial robots, it is desirable to develop schemes that reliably estimate the contact forces and torques solely based on measurements that are typically available, namely joint angles and motor torques.

Reference is made to the following state of the art documents:

[1] M. Linderoth, A. Stolt, A. Robertsson, and R. Johansson. Robotic force estimation using motor torques and modeling of low velocity friction disturbances. In IEEE/RSJ International Conference on Intelligent Robots and Systems, Tokyo, Japan, 2013,

[2] A. Stolt, M. Linderoth, A. Robertsson, and R. Johansson. Force controlled robotic assembly without a force sensor. In IEEE International Conference on Robotics and Automation, pages 1538-1543, Minnesota, USA, 2012,

[3] L. D. Phong, J. Choi, and S. Kang. External force estimation using joint torque sensors for a robot manipulator. In IEEE International Conference on Robotics and Automation, pages 4507-4512, 2012,

[4] M. Van Damme, P. Beyl, B. Vanderborght, V. Grosu, R. Van Ham, I. Vanderniepen, A. Matthys, and D. Lefeber. Estimating robot endeffector force from noisy actuator torque measurements. In IEEE International Conference on Robotics and Automation, pages 1108-1113, 2011,

[5]A. De Luca, A. Albu-Schaffer, S. Haddadin, and G. Hirzinger, "Collision detection and safe reaction with the dlr-iii lightweight manipulator arm, " in Intelligent Robots and Systems, 2006 IEEE/RSJ International Conference on, Oct 2006, pp. 1623-1630,

[6]EP 2 815 855 A2

[7]TUNGPATARATANAWONG S ET AL: " Force sensor-less workspace impedance control considering resonant vibration of industrial robot", INDUSTRIAL ELECTRONICS SOCIETY, 2005. IECON 2005. 31ST ANNUAL CONFERENCE OF IEEE, IEEE, PISCATAWAY, N J , USA, 6 November 2005 (2005-11-06), pages 1878-1883, XP010876402, DOI: 10.1109/IECON.2005. 1569191, ISBN: 978-0-7803-9252-6.

According to [1] and [2] the external wrench is obtained from an estimate of the torques Text. Therein, prior knowledge on the variation of contact forces and torques respectively wrenches is incorporated via constant weighting matrices that are tuned manually. According to [2] low-level robot controls are de-tuned resulting the robot joints to behave like springs. From their displacement and stiffness, Text is estimated. In [1], a friction model with constant parameters is employed to estimate Text.

In the scientific literature, observer-based schemes are frequently employed to estimate the external wrench, compare [3], [4], [5], [6]. However, these results rely on joint torque measurements which need additional sensing.

In particular,[6] discloses a method according to the preamble of claim 1.

discloses a robot control scheme in which collision of a robot with its environment is detected based on the angular position of a joint and the current of a motor driving rotation of the joint.

A shortcoming of the state of the art is that either additional sensors are required, a higher manual effort is required or the estimation is subject to a low quality of the estimated values.

The objective of the invention is to provide a method for estimating the external wrench fat the tool center point respectively the tip of the robot arm with high quality while avoiding the use of external force/torque sensors.

The problem is solved by a method as defined in claim 1.

The basic idea of the invention is to provide an improved method for estimating contact forces and torques at the tip of the robot arm respectively its tool center point (TCP) based solely on joint angles, motor torques and a dynamic model of the robot so that no additional sensors such as joint torque sensors of force/torque sensors mounted on the wrist are needed.

Robot dynamics may in general be described by the equation

$$H(q) \cdot \ddot{q} + C(q,\dot{q}) \cdot \dot{q} + \tau_{grav}(q) + \tau_{fric} + \tau_{ext} = \tau_{mot} \qquad (1)$$

wherein $H(q) \cdot \ddot{q} + C(q,\dot{q}) \cdot \dot{q}$ captures dynamic effects, $\tau_{grav}(q)$ and $\tau_{fric}$ result from gravity and joint friction, respectively, $\tau_{ext}$ arises from external forces and torques and $\tau_{mot}$ contains the torques exerted by the motors.

According to the invention the friction torque vector $\tau_{fric}$ is estimated based on a respective friction model of the joints and is using the speed vector $\dot{q}$ which is derived from q. It can be assumed that the speed has a good correlation to the friction torque within the joint of a robot arm. In contrast to [1] and [2], it is proposed to identify and adapt the coefficients of the friction model online. Thereby, changes in the friction (e.g. due to temperature changes) can be accounted for. Thus, a higher accuracy can be achieved for the estimate of $\tau_{ext}$ following (2), leading to higher precision in the estimated external wrench f.

The torques $\tau_{ext}$ are related to the external wrench $f$ (i.e. forces and torques) at the tool center point (TCP) by $\tau_{ext} = J^T(q) \cdot f$, where $J(q)$ is the robot Jacobian matrix which characterizes the kinematic chain of the robot arm.

Each of the three terms

(1)

$$H(q) \cdot \ddot{q} + C(q,\dot{q}) \cdot \dot{q} + \tau_{grav}(q),$$

(2) $\tau_{mot}$ and
(3) q

is typically available from low-level robot controls of the robot controller since they are required to continuously adjust the desired joint angles.

The proposed scheme is based on obtaining an estimate for $\tau_{ext}$ from

$$\tau_{ext} = \tau_{mot} - \left(H(q) \cdot \ddot{q} + C(q,\dot{q}) \cdot \dot{q} + \tau_{grav}(q) + \tau_{fric}\right) \quad (2)$$

wherein $H(q) \cdot \ddot{q} + C(q,\dot{q}) \cdot \dot{q} + \tau_{grav}(q)$ are measured from low-level robot controls and $\tau_{fric}$ is estimated based on a friction model of the robot.

As described in the state of the art, in [1] and [2] weighting matrices can be employed to improve the estimation of the external wrench. According to the invention and similar to [1] and [2], the externally applied wrench is obtained from

$$f_{ext} = R_F J(q) \cdot \left(J^T(q) \cdot R_F \cdot J(q) + R_e\right)^{(-1)} \cdot \tau_{ext} \quad (3)$$

where $R_F$ and $R_e$ are weighting matrices.

Thus an estimation of the externally applied wrench $\tau_{ext}$ on the robot arm is enabled in an easy way by use of values which are already provided within the robot controller wherein additional sensors are avoided in an advantageous way.

According to another variant of the invention the respective steps are performed by the robot controller in real time wherein the estimated externally applied wrench $\tau_{ext}$ is continuously provided to a safety functionality of the robot. The robot controller can be understood as a computing device. By providing an additional software program product running thereon the externally applied wrench can be calculated by the robot controller itself without the need of additional hardware.

The externally applied wrench which a robot is currently able to impact on a person or on an object is of importance for safety aspects. So a control criterion for the robot controller could be not to exceed a maximum admitted wrench level during execution of a robot program, so that in case of exceeding this level the speed of the robot arm is automatically reduced to a lower level, deviant from the speed determined within the robot program.

In order to have the information of the current externally applied wrench synchronously with the current position of the robot arm the determination of the wrench has to be performed in real time. A time delay of a few 10 milliseconds has to be under stood as real time within the frame of this invention.

Another focus of the invention is to improve the calculation of the wrench $f$, which is in principal done by using the equation $\tau_{ext} = J^T(q) \cdot f$, by introducing weighting matrices as proposed in [1] and [2]. Thus, according to an embodiment of the invention the continuously estimating the externally applied wrench $\tau_{ext}$ on the robot arm is calculated based on following equation:

$$f_{ext} = R_F J(q) \cdot \left(J^T(q) \cdot R_F \cdot J(q) + R_e\right)^{(-1)} \cdot \tau_{ext},$$

wherein $R_F$ and $R_e$ are weighting matrices. Those matrices have to be adapted to the robot system in order to improve the reliability. This adaptation might be done manually.

According to a preferred embodiment of the invention the weighting matrices $R_F$ and $R_e$ are automatically iterative adapted online during real time execution of the method according to the invention.

Instead of manually tuning the weighting matrices in a tedious trial-and-error procedure, the calibration is to be automated, unburdening the user from this task and allowing for improved results.

Instead of tuning the weighting matrices to fixed values once in an offline procedure, the calibration is to be adapted online. Therewith, the fact that the variation of contact forces is small for free movement of the TCP but large in contact situations can be taken into account. While for the offline calibration of weighting matrices as proposed in [1] and [2] a trade-off has to be found to achieve reasonable results for both situations, the online adaptation allows optimizing the quality of the estimation for both situations.

According to the invention the weighting matrices are adapted in certain consecutive time steps respectively time intervals k. In each time step k, the external wrench $f_{ext}$ respectively $\hat{f}^k$ is estimated by means of

$$\hat{f}^k = R_F^k J^k(q^k) \cdot \left(J^{T^k}(q^k) R_F^k J^k(q^k) + R_e^k\right)^{-1} \cdot \tau_{ext}^k.$$

Notice that the weighting matrices $R_F^k$ and $R_e^k$ are not constant, but time-varying. To this end, prior to calculating $\hat{f}^k$ in each time step, the past $l$ samples are considered. For this sliding time window, the past external wrench estimates $\hat{f}$,

$i = k\text{-}l, ...,k\text{-}1$ are assumed to be correct. The objective for calibrating the weighting matrices is to find $R_F^k$ and $R_e^k$ such that the past estimates $\hat{f}^i$ can be explained by the measured torque data $\tau_{ext}^i$ as well as possible. Hence, the overall scheme of calibrating the weighting matrices and performing the actual external wrench estimation can be summarized as follows:

$$\left(R_F^k, R_e^k\right) = \underset{R_F^k, R_e^k}{\operatorname{argmin}} \sum_{i=k-l}^{k-1} \left\| R_F^k J^i(q^i) \cdot \left(J^{T^i}(q^i)R_F^k J^i(q^i) + R_e^k\right)^{-1} \cdot \tau_{ext}^i - \hat{f}^i \right\|_2^2,$$

$$\hat{f}^k = R_F^k J^k(q^k) \cdot \left(J^{T^k}(q^k)R_F^k J^k(q^k) + R_e^k\right)^{-1} \cdot \tau_{ext}^k.$$

The first equation calibrates the weighting matrices based on past external wrench estimates. The second equation computes the new external wrench estimate $\hat{f}^k$. Notice that the calibration can only start after $l$ samples. A typical value for the length of a time step k might be in the range of 2ms - 10ms for example, wherein the number $l$ of samples, which are included in the sliding time window might amount 50 - 200 and wherein the total length of the sliding time window might amount 300ms ... 500ms. Of course this is only one example within a wide range of several combination possibilities.

The quality of this estimation is improved by introducing weighting matrices. In contrast to existing results, these weighting matrices do not have to be tuned manually in a tedious offline procedure, but are calibrated automatically during runtime improving both as well ease-of-use of the method as the quality of the force and torque estimates.

Further advantageous embodiments of the invention are mentioned in the dependent claims.

The invention will now be further explained by means of an exemplary embodiment and with reference to the accompanying drawings, in which:

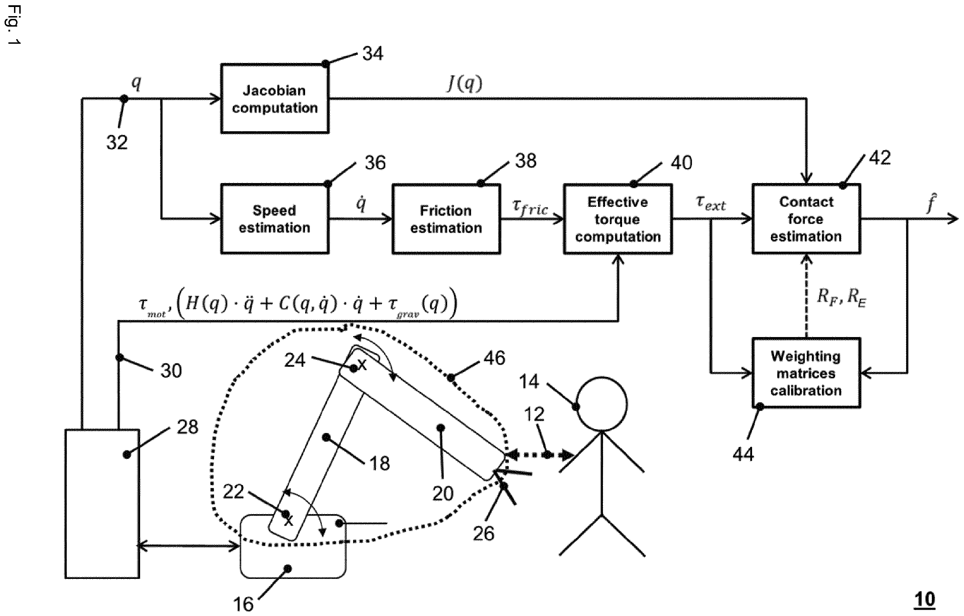

Figure 1    shows an overview on the method for estimating the contact force of the robot arm.

Figure 1 shows an overview 10 on the method for estimating the externally applied wrench on a robot arm. A robot comprises a robot base 16 and a robot arm 46 mounted thereon. The robot arm 46 comprises several robot arm members 18, 20 which are linked to a kinematic chain by motor respective driven joints 22, 24. At the tip of the robot arm 46 a gripper tool 26 is provided. A robot controller 28 is adapted to control the movement of the robot arm 46 according to data of a robot program, which is stored within the memory of the robot controller 28.

The joints 22, 24 of the robot comprise means for determining the current joint angles which data are provided to the robot controller 28. These are base data which are required to control the joint motors in that way that the tip of the robot arm 46 is moving along a predetermined path as defined within the robot program. Also the current flows through the respective motors are base data which are used to determine for example the motor torques Tmot therefrom. This is also the base for determining the term

$$H(q) \cdot \ddot{q} + C(q,\dot{q}) \cdot \dot{q} + \tau_{grav}(q)$$

which is considering dynamic effects and gravity.

Dependent on the current joint angles of the robot arm respectively its current speed the robot arm might exert a contact force 12 or torques onto a human collaborator 14 which is in the near of the robot or even on any other object.

The terms $\tau_{mot}$, $H(q) \cdot \ddot{q} + C(q,\dot{q}) \cdot \dot{q} + \tau_{grav}(q)$ as second group 32 and q as first group 30 are continuously provided from the robot controller 28 as input for the method for estimating the externally applied wrench on a robot arm.

By use of several determination functions 34, 36, 38, 40, 42, 44 the externally applied wrench $f_{ext}$ is determined according to the equations:

$$f_{ext} = R_F J(q) \cdot \left(J^T(q) \cdot R_F \cdot J(q) + R_e\right)^{(-1)} \cdot \tau_{ext}$$

$$\tau_{ext} = \tau_{mot} - \left(H(q) \cdot \ddot{q} + C(q,\dot{q}) \cdot \dot{q} + \tau_{grav}(q) + \tau_{fric}\right)$$

$$\tau_{fric} = f\left(\dot{q}\right)$$

The weighting matrices $R_F$ and $R_e$ are automatically iteratively adapted online during real time execution of the method according to the invention.

List of reference signs

10 overview on method for estimating the externally applied wrench
12 wrench
14 human collaborator
16 base of robot arm
18 first robot arm member
20 second robot arm member
22 first joint
24 second joints
26 gripper
28 robot controller
30 first group of continuously provided data vectors
32 second group of continuously provided data vectors
34 first determination function
36 second determination function
38 third determination function
40 fourth determination function
42 fifth determination function
44 sixth determination function

**Claims**

1.  Method for estimating the externally applied wrench (12) on the robot arm (46) of a robot with a kinematic chain of robot arm members (22, 24) which are coupled by respective joints (22, 24), wherein the joints (22, 24) are driven by respective motors and wherein the robot comprises a robot controller (28) which is adapted

    • to control the movement of the robot arm (46) according to data of a robot program, and
    • to continuously provide

      • the torque vector $\tau_{mot}$ of the joint (22, 24) motors,
      • the dynamic behavior of the robot arm (46), described by

$$\left(H(q) \cdot \ddot{q} + C(q,\dot{q}) \cdot \dot{q} + \tau_{grav}(q)\right),$$

      • a torque vector $\tau_{grav}(q)$ which consists of torques due to gravity effects,
      • the current joint (22, 24) angles q of the robot arm (46), and
      • the Jacobian Matrix J of the robot arm (46) which characterizes its kinematic chain,

    **characterized by** the following steps:

      • continuously estimating the friction torque vector $\tau_{fric}$ based on a respective friction model of the joints (22, 24) and by using the speed vector $\dot{q}$ which is derived from the current joint (22,24) angles q;
      • continuously determining the external torque vector Text by use of the following equation:

$$\tau_{ext} = \tau_{mot} - \left(H(q) \cdot \ddot{q} + C(q,\dot{q}) \cdot \dot{q} + \tau_{grav}(q) + \tau_{fric}\right),$$

• continuously estimating the externally applied wrench $f_{\text{ext}}$ on the robot arm (46) dependent on the current joint (22, 24) angles (q) based on the Jacobian matrix J and the external torque vector $\tau_{ext}$.

2. Method according to claim 1, **characterized in that** the steps are performed by the robot controller (28) in real time and **in that** the estimated externally applied wrench $f_{\text{ext}}$ is continuously provided to a safety functionality of the robot arm (46).

3. Method according to any of the previous claims, **characterized in that** the continuously estimating the externally applied wrench $f_{\text{ext}}$ on the robot arm (46) is calculated based on following equation:

$$f_{\text{ext}} = R_F \, J^{\cdot} \, (q) \cdot (J^T \, (q) \cdot R_F \cdot J(q) + R_e \,)^{\,(-1)} \cdot \tau_{ext}$$

wherein $R_F$ and $R_e$ are weighting matrices.

4. Method according to claim 3, **characterized in that** the weighting matrices $R_F$ and $R_e$ are automatically iteratively adapted online during real time execution of the method.

**Patentansprüche**

1. Verfahren zum Abschätzen der von außen auf den Roboterarm (46) eines Roboters mit einer kinematischen Kette von durch entsprechende Gelenke (22, 24) gekoppelten Roboterarmgliedern (22, 24) einwirkenden Dyname (12), wobei die Gelenke (22, 24) durch entsprechende Motoren angetrieben sind und wobei der Roboter eine Robotersteuerung (28) umfasst, die eingerichtet ist,

• die Bewegung des Roboterarms (46) gemäß Daten eines Roboterprogramms zu steuern und
• kontinuierlich

- den Drehmomentvektor $\tau_{mot}$ der Motoren der Gelenke (22, 24),
- das dynamische Verhalten des Roboterarms (46), beschrieben durch

$$\left( H(q) \cdot \ddot{q} + C(q,\dot{q}) \cdot \dot{q} + \tau_{grav}(q) \right),$$

- einen Drehmomentvektor $\tau_{grav}$ (q), der aus Drehmomenten aufgrund von Schwerkrafteffekten besteht,
- die aktuellen Winkel q der Gelenke (22, 24) des Roboterarms (46), und
- die Jacobimatrix J des Roboterarms (46), die seine kinematische Kette charakterisiert,

bereitzustellen,

**gekennzeichnet durch** die folgenden Schritte:

• kontinuierliches Schätzen des Reibungsmomentvektors $\tau_{fric}$ auf der Grundlage eines jeweiligen Reibungsmodells der Gelenke (22, 24) und unter Verwendung des aus q abgeleiteten Geschwindigkeitsvektors $\dot{q}$;
• kontinuierliches Bestimmen des Vektors Text des externen Drehmoments unter Verwendung der folgenden Gleichung:

$$\tau_{ext} = \tau_{mot} - \left( H(q) \cdot \ddot{q} + C(q,\dot{q}) \cdot \dot{q} + \tau_{grav}(q) + \tau_{fric} \right),$$

• kontinuierliches Schätzen der von außen auf den Roboterarm (46) einwirkenden Dyname $f_{\text{ext}}$ in Abhängigkeit von den aktuellen Winkeln (q) der Gelenke (22, 24) auf der Basis der Jacobimatrix J und des externen Dreh-momentvektors $\tau_{ext}$.

2. Verfahren nach Anspruch 1, **dadurch gekennzeichnet, dass** die Schritte von der Robotersteuerung (28) in Echtzeit durchgeführt werden und dass die geschätzte, von außen einwirkende Dyname $f_{\text{ext}}$ kontinuierlich einer Sicher-

heitsfunktionalität des Roboterarms (46) zugeführt wird.

3. Verfahren nach einem der vorhergehenden Ansprüche, **dadurch gekennzeichnet, dass** das kontinuierliche Schätzen der von außen auf den Roboterarm (46) einwirkenden Dyname $f_{\text{ext}}$ auf der Grundlage der folgenden Gleichung berechnet wird:

$$f_{\text{ext}} = R_F \, J^{\text{-}} (q) \cdot \left( J^T (q) \cdot R_F \cdot J(q) + R_e \right)^{(-1)} \cdot \tau_{ext}$$

wobei $R_F$ und $R_e$ Gewichtungsmatrizen sind.

4. Verfahren nach Anspruch 3, **dadurch gekennzeichnet, dass** die Gewichtungsmatrizen $R_F$ und $R_e$ während der Echtzeitausführung des Verfahrens automatisch iterativ online angepasst werden.

**Revendications**

1. Procédé d'estimation du torseur appliquée extérieurement (12) sur le bras de robot (46) d'un robot ayant une chaîne cinématique d'éléments de bras de robot (22, 24) qui sont couplés par des articulations respectives (22, 24), et dans lequel les articulations (22, 24) sont entraînées par des moteurs respectifs, le robot comprenant un contrôleur de robot (28) qui est adapté

• pour commander le mouvement du bras de robot (46) selon les données d'un programme de robot, et
• pour fournir en continu

- le vecteur couple $\tau_{mot}$ des moteurs des articulations (22, 24),
- le comportement dynamique du bras du robot (46),décrit par

$$\left( H(q) \cdot \ddot{q} + C(q,\dot{q}) \cdot \dot{q} + \tau_{grav}(q) \right),$$

- un vecteur de couple $\tau_{grav}$ (q), qui consiste en des couples dus aux effets de la gravité,
- les angles actuels q des articulations (22, 24) du bras du robot (46), et
- la matrice jacobienne J du bras du robot (46) qui caractérise sa chaîne cinématique,

**caractérisé par** les étapes suivantes :

• estimation en continu du vecteur couple de friction $\tau_{fric}$ sur la base d'un modèle de friction respectif des articulations (22, 24) et en utilisant le vecteur vitesse $\dot{q}$ qui est dérivé de $q$;
• détermination en continu du vecteur Text de couple externe à l'aide de l'équation suivante:

$$\tau_{ext} = \tau_{mot} - \left( H(q) \cdot \ddot{q} + C(q,\dot{q}) \cdot \dot{q} + \tau_{grav}(q) + \tau_{fric} \right),$$

• estimation en continu du torseur $f_{\text{ext}}$ appliqué extérieurement sur le bras du robot (46) en fonction des angles (q) actuels des articulations (22, 24) sur la base de la matrice jacobienne $J$ et du vecteur de couple externe $\tau_{ext}$.

2. Procédé selon la revendication 1, **caractérisé en ce que** les étapes sont réalisées par le contrôleur de robot (28) en temps réel et **en ce que** le torseur appliqué extérieurement estimé $f_{\text{ext}}$ est fourni en continu à une fonctionnalité de sécurité du bras de robot (46).

3. Procédé selon l'une quelconque des revendications précédentes, **caractérisé en ce que** l'estimation continue du torseur $f_{\text{ext}}$ appliqué extérieurement sur le bras de robot (46) est calculée sur la base de l'équation suivante :

$$f_{\text{ext}} = R_F \, J^{\text{-}} (q) \cdot \left( J^T (q) \cdot R_F \cdot J(q) + R_e \right)^{(-1)} \cdot \tau_{ext}$$

dans laquelle $R_F$ et $R_e$ sont des matrices de pondération.

4. Procédé selon la revendication 3, **caractérisé en ce que** les matrices de pondération $R_F$ et $R_e$ sont automatiquement adaptées en ligne de manière itérative pendant l'exécution en temps réel du procédé.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2815855 A2

### Non-patent literature cited in the description

- **M. LINDEROTH ; A. STOLT ; A. ROBERTSSON ; R. JOHANSSON.** Robotic force estimation using motor torques and modeling of low velocity friction disturbances. *IEEE/RSJ International Conference on Intelligent Robots and Systems, Tokyo, Japan,* 2013
- **A. STOLT ; M. LINDEROTH ; A. ROBERTSSON ; R. JOHANSSON.** Force controlled robotic assembly without a force sensor. *IEEE International Conference on Robotics and Automation,* 2012, 1538-1543
- **L. D. PHONG ; J. CHOI ; S. KANG.** External force estimation using joint torque sensors for a robot manipulator. *IEEE International Conference on Robotics and Automation,* 2012, 4507-4512
- **M. VAN DAMME ; P. BEYL ; B. VANDERBORGHT ; V. GROSU ; R. VAN HAM ; I. VANDERNIEPEN ; A. MATTHYS ; D. LEFEBER.** Estimating robot endeffector force from noisy actuator torque measurements. *IEEE International Conference on Robotics and Automation,* 2011, 1108-1113
- **A. DE LUCA ; A. ALBU-SCHAFFER ; S. HADDADIN ; G. HIRZINGER.** Collision detection and safe reaction with the dlr-iii lightweight manipulator arm. *Intelligent Robots and Systems, 2006 IEEE/RSJ International Conference,* October 2006, 1623-1630
- Force sensor-less workspace impedance control considering resonant vibration of industrial robot. **TUNGPATARATANAWONG S et al.** INDUSTRIAL ELECTRONICS SOCIETY, 2005. IECON 2005. 31ST ANNUAL CONFERENCE OF IEEE. IEEE, 06 November 2005, 1878-1883